# EUROPÄISCHE PATENTSCHRIFT

(11) **EP 3 559 632 B1**
(45) Veröffentlichungstag und Bekanntmachung des Hinweises auf die Patenterteilung: **06.07.2022**
(21) Anmeldenummer: 17832218.6
(22) Anmeldetag: 19.12.2017
(51) Int. Cl.: G01N 19/02, G01N 3/32, G01N 3/56

(54) **MODELLPRÜFSTAND FÜR TRIBOLOGISCHE UNTERSUCHUNGEN AN SCHEIBENFÖRMIGEN UNRUNDEN PRÜFKÖRPERN**
MODEL TEST STAND FOR THE TRIBOLOGICAL EXAMINATION OF DISK-SHAPED, NON-CIRCULAR TEST SPECIMENS
BANC D'ESSAI POUR MODÈLES POUR DES ESSAIS TRIBOLOGIQUES SUR DES CORPS D'ESSAI NON CIRCULAIRES, EN FORME DE DISQUE

(30) Priorität: 24.12.2016 DE 102016015529
(43) Veröffentlichungstag der Anmeldung: 30.10.2019
(73) Patentinhaber: Tenberge, Peter, 44797 Bochum (DE)
(72) Erfinder: WEIBRING, Max, 44801 Bochum (DE); GONDECKI, Leonard, 44795 Bochum (DE); TENBERGE, Peter, 44797 Bochum (DE)
(74) Vertreter: Bals & Vogel Patentanwälte PartGmbB
(86) Internationale Anmeldenummer: PCT/EP2017/083542
(87) Internationale Veröffentlichungsnummer: WO 2018/114950

(56) Entgegenhaltungen:
- WO-A2-01/27609
- DE-A1- 3 604 653
- DE-C1- 3 140 661
- GB-A- 2 194 060
- US-B1- 6 227 032

## Beschreibung

Die Erfindung betrifft einen Modellprüfstand für tribologische Untersuchungen an scheibenförmigen Prüfkörpern, mit einer ersten Welle, die in einem ersten Gestell gelagert ist und von einem Antriebsmotor angetrieben wird und einen ersten scheibenförmigen Prüfkörper in einer ersten Stirnschnittebene trägt, und mit einer zweiten Welle, die in einem zweiten Gestell parallel zur ersten Welle gelagert ist und die von der ersten Welle aus über ein Getriebe angetrieben wird und einen zweiten scheibenförmigen Prüfkörper in der ersten Stirnschnittebene trägt, wobei das erste Gestell fest in einem Rahmen sitzt und das zweite Gestell beweglich in dem Rahmen gelagert ist, und mit einer Belastungseinrichtung zwischen dem ersten Gestell und dem zweiten Gestell.

Modellprüfstände sind nach dem Stand der Technik in vielfältigen Ausführungsformen bekannt. Sie werden meist für tribologische Grundlagenuntersuchungen eingesetzt, um die durchaus sehr komplexen Reibungs- und Verschleißphänomene im Kontakt zweier Prüfkörper unter Belastung und Relativbewegung zu erforschen. Reibung und Verschleiß in den sogenannten Gleitwälzkontakten hängen von der Geometrie der Prüfkörper, deren Relativbewegungen, deren Oberflächenbeschaffenheiten, dem Schmierstoff im Kontakt, den Temperaturverhältnissen, der umgebenden Atmosphäre und weiteren Bedingungen ab. Um die Ergebnisse aus solchen Modellprüfständen gut auf reale Maschinenelemente in realen Anwendungen übertragen zu können, gibt es eine Vielzahl solcher Modellprüfstände, die sich in der Form der Prüfkörper, den Bewegungen der Prüfkörper und weiteren Betriebsbedingungen unterscheiden.

Bei dieser Erfindung geht es um einen Modellprüfstand, der für tribologische Untersuchungen an scheibenförmigen Prüfkörpern geeignet ist, um die elementaren Phänomene von Reibung und Verschleiß zu untersuchen, wie sie in den Gleitwälzkontakten von Zahnrädern vorkommen. In den Zahneingriffen von Zahnradstufen beginnt ein Zahneingriff mit dem Auftreffen der äußeren Zahnkopfecke eines Zahnes des getriebenen Zahnrades auf die Zahnflanke des treibenden Rades im Bereich des Zahnfußes. Während des Zahneingriffs wandert der Kontaktpunkt in jedem Stirnschnitt vom Eingriffsbeginn bis zum Eingriffsende, bei dem die äußere Zahnkopfecke des Zahnes des treibenden Zahnrades den Kontakt mit der Zahnflanke des getriebenen Zahnrades verliert. Während des Eingriffs ändern sich die Wälz- und die Gleitgeschwindigkeiten der Zahnflanken in den Kontaktpunkten, die Gleitwege und die Kontaktpressungen. Damit ändern sich auch die schmierfilmbildenden Parameter und somit auch die Dicke des trennenden Schmierfilms. Im sogenannten Wälzpunkt ändert sich sogar das Vorzeichen der Gleitgeschwindigkeit. Aus der jüngsten Forschung ist bekannt, dass sich die finalen Ausprägungen des Verschleißes wie Auskolkung, Rissbildung an der Oberfläche, Rissvernetzung bis zur Ausbildung der sogenannten Graufleckigkeit, Werkstoffermüdung an der Oberfläche und unter der Oberfläche bis zur Ausbildung von Grübchen stark gegenseitig beeinflussen. Um diese Wechselwirkungen auf einem Modellprüfstand mit einfachen Prüfkörpern so nachzubilden, dass die Ergebnisse gut auf reale Zahneingriffe übertragbar sind, bedarf es eines Modellprüfstandes, in dem die wesentlichen, die Tribologie bestimmenden Parameter möglichst realitätsnah eingestellt werden können.

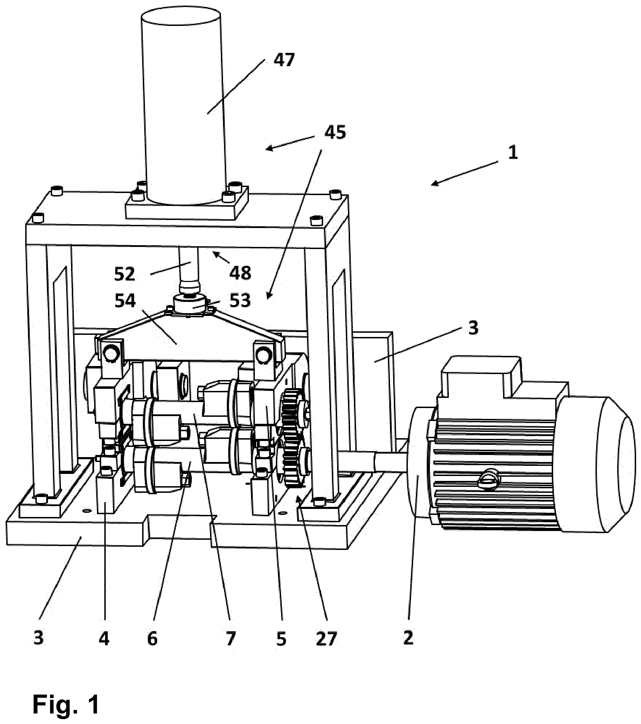

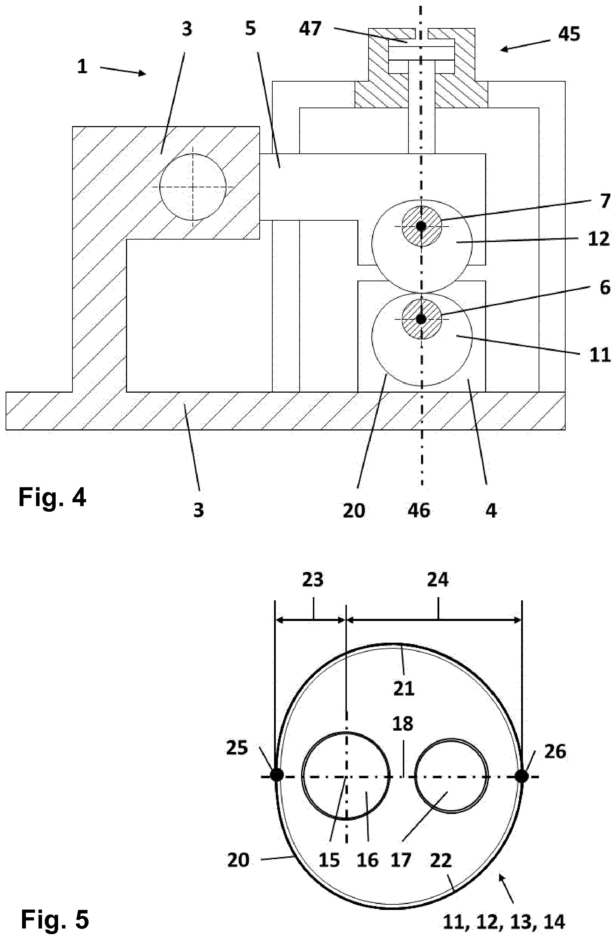

In der DE 36 04 653 A1 ist so ein Modellprüfstand beschrieben. Aus der Fig. 1 dieses Standes der Technik geht hervor, dass dort zwei scheibenförmige Prüfkörper auf parallelen Wellen gelagert sind, die von einer Belastungseinrichtung so gegeneinander gedrückt werden, dass sich die Prüfkörper in einer Stirnschnittebene berühren. Der Prüfstand wir von einem Antriebsmotor angetrieben. Die beiden Wellen sind über ein Getriebe gekoppelt. In diesem Stand der Technik ist das Getriebe ein mehrgliedriges Koppelgetriebe, das die konstante Drehzahl des Antriebsmotors auf Schwingbewegungen der Prüfkörper übersetzt. Der Modellprüfstand ist nach Fig. 4 so ausgestaltet, dass sich in den Kontakten der Prüfkörper ähnliche relative Geschwindigkeitsverhältnisse wie in realen Zahneingriffen von Zahnradgetrieben einstellen.

Wenn man aber einen Modellprüfstand dieser Art so dimensioniert, dass auch die absoluten Gleit- und Wälzbewegungen erreicht werden, ergeben sich sehr hohe Beschleunigungen im Koppelgetriebe und damit sehr große Belastungen an den vielen Koppelgelenken. Daraus entstehen dynamische Zusatzbelastungen im Modellprüfstand, die die Übertragbarkeit der Ergebnisse auf reale Zahneingriffe erschweren. Der Modellprüfstand nach dem o.a. Stand der Technik benötigt auch zwingend eine Abhebevorrichtung, um die scheibenförmigen Prüfkörper nur während der Vorbewegung tribologisch zu belasten und während der Rückbewegung außer Eingriff zu bringen. Durch so eine Abhebevorrichtung kommen weitere dynamische Belastungen in den Modellprüfstand.

In der DE 31 40 661 C1 ist ebenfalls so ein Modellprüfstand für tribologische Untersuchungen beschrieben. Auch dieser Prüfstand hat das Ziel, die Gleitwälzkontakte von scheibenförmigen Prüfkörpern möglichst genauso wie die Gleitwälzkontakte von Zahnradflanken im Eingriff zu belasten und gegeneinander zu bewegen. Damit soll auch hier eine gute Übertragbarkeit der auf dem Modellprüfstand ermittelten Ergebnisse auf Zahnradgetriebe erreicht werden. In diesem Stand der Technik sind die scheibenförmigen Prüfkörper drehfest auf Schwinghebeln befestigt. Ein Antriebssystem übersetzt auch hier wie in der DE 36 04 653 A1 die konstante Drehzahl des Antriebsmotors auf Schwingbewegungen der Prüfkörper. Somit treten auch in diesem Modellprüfstand hohe dynamische Zusatzlasten aufgrund des Antriebsprinzips auf.

In der GB 2 194 060 A ist noch ein weiterer Modellprüfstand für tribologische Untersuchungen, insbesondere für vergleichende Tests von Schmierstoffen beschrieben. Auch dieser Modellprüfstand weist zwei scheibenförmige Prüfkörper auf, die unter Last in Kontakt stehen. Ein Prüfkörper wird mit einer konstanten Drehzahl angetrieben. Der andere Prüfkörper wird mit einer variablen Drehzahl angetrieben. Dazu sitzt ein Teilantriebssystem zwischen den beiden Wellen der scheibenförmigen Prüfkörper, das die konstante Drehzahl des ersten Prüfkörpers über ein ungleichförmig übersetzendes Getriebe auf eine schwingende Drehbewegung des zweiten Prüfkörpers übersetzt. Mit diesem Modellprüfstand werden durchaus die zu Zahnradgetrieben vergleichbaren Verhältnisse von Gleitgeschwindigkeit zu Umfangsgeschwindigkeit in den Gleitwälzkontakten erreicht. Bei der Nachbildung der hohen Eingriffsfrequenzen von Zahnradgetrieben würden aber auch in diesem Modellprüfstand hohe dynamische Zusatzlasten aufgrund des Antriebsprinzips auftreten.

Aus dieser Analyse des Standes der Technik ergibt sich die Aufgabenstellung, einen Modellprüfstand so zu gestalten, dass damit Gleitwälzkontakte bei zu Zahnradgetrieben vergleichbaren absoluten Wälz- und Gleitbewegungen sowie Kontaktlängen, Gleitwegen und Pressungen untersucht werden können. Dabei soll der Prüfstand nur minimale Schwingbewegungen aufweisen, um die Betriebsbedingungen möglichst wenig durch nicht anwendungskonforme dynamische Zusatzbelastungen zu verfälschen. Darüber hinaus sollen die Prüfkörper eine einfache Form aufweisen, um in großer Stückzahl kostengünstig hergestellt werden zu können. Zudem sollen sich die Prüfkörper leicht auf den Wellen montieren und ausrichten lassen, so dass der Wechsel von Prüfkörpern schnell und präzise erfolgt. Die Belastungseinrichtung soll eindeutige Lasten auf die Prüfkörper aufprägen können. Alle Prüfbedingungen müssen auf einfache Weise genau reproduzierbar einstellbar sein.

Erfindungsgemäß werden diese Aufgaben nach den kennzeichnenden Teilen der Ansprüche gelöst.

Nach dem Anspruch 1 ist vorgesehen, dass der erste scheibenförmige Prüfkörper und der zweite scheibenförmige Prüfkörper jeweils eine unrunde Außenkontur mit stetig veränderlicher Krümmung in der ersten Stirnschnittebene aufweisen mit einem ersten Teilprofil und einem zweiten Teilprofil, die auf gegenüberliegenden Seiten einer Symmetrielinie liegen und durch Spiegelung an dieser Symmetrielinie ineinander übergehen, und dass beide scheibenförmige Prüfkörper ein Zentrum des Prüfkörpers haben, das auf der Symmetrielinie liegt mit einem kleinsten Konturabstand zu einem Schnittpunkt der Symmetrielinie mit der unrunden Außenkontur in einem ersten Konturpunkt und einem größten Konturabstand zum anderen Schnittpunkt der Symmetrielinie mit der unrunden Außenkontur in einem zweiten Konturpunkt.

Durch den Einsatz scheibenförmiger Prüfkörper mit unrunder Außenkontur mit zwei identischen Teilprofilen zwischen den ersten und zweiten Konturpunkten, die durch Spiegelung an einer Symmetrielinie ineinander übergehen, wird vorteilhaft erreicht, dass sich die Antriebsdrehzahlen der beiden Wellen während einer Umdrehung der Prüfkörper nicht verändern müssen. Zur Nachbildung von Drehzahlkollektiven müssen sich die Drehzahlen der Wellen nur so langsam verändern, wie das auch in realen Zahnradstufen ohne Probleme machbar ist.

Scheibenförmige Prüfkörper mit unrunden Außenkonturen lassen sich auch in großen Stückzahlen einfach durch Fräsen, Erodieren, Wasserstrahlschneiden oder andere Standardverfahren auf CNC-gesteuerten Maschinen herstellen. Zudem sollen die scheibenförmigen Prüfkörper in allen Achsschnitten leicht ballige Außenkonturen aufweisen, die nach dem Stand der Technik zu einer Vermeidung von Kantenträgern infolge elastischer Deformationen im Modellprüfstand beitragen. Diese Breitenballigkeiten sind mit gleichen Technologien einfach herstellbar wie die Breitenballigkeiten der Zahnflanken von Zahnrädern.

In weiterer Ausgestaltung der Erfindung wird nach Anspruch 2 spezifiziert, dass der erste und der zweite scheibenförmige Prüfkörper je eine erste Bohrung aufweisen, deren Mitte im Zentrum des Prüfkörpers liegt, und dass die scheibenförmigen Prüfkörper je eine zweite Bohrung aufweisen, deren Mitte vorzugsweise auf der Symmetrielinie zwischen dem Zentrum des Prüfkörpers und dem zweiten Konturpunkt mit dem größten Konturabstand liegt, und dass die scheibenförmigen Prüfkörper mittels der ersten Bohrungen auf Zentrierabsätzen für Prüfkörper auf den Wellen zentriert werden und dass die scheibenförmigen Prüfkörper mittels der zweiten Bohrungen und weiterer Passelemente auf den Wellen ausgerichtet werden.

Die technische Lehre nach diesem Anspruch definiert eindeutig, wie die scheibenförmigen Prüfkörper auf einer Welle positioniert und ausgerichtet werden.

Jedes der beiden Teilprofile der unrunden Kontur des scheibenförmigen Prüfkörpers repräsentiert eine Zahnflanke eines Zahnrades, dessen tribologisches Verhalten im Kontakt zu einem Gegenrad nachgestellt werden soll. Damit ein Teilprofil des ersten scheibenförmigen Prüfkörpers auf der ersten Welle exakt auf einem Teilprofil des zweiten scheibenförmigen Prüfkörpers auf der zweiten Welle wälzen und gleiten kann, ist nach Anspruch 3 vorgesehen, dass das Getriebe die erste Welle und die zweite Welle über eine Stirnradstufe mit einer konstanten Übersetzung von i=-1 zwischen einem ersten Zahnrad auf der ersten Welle und einem zweiten Zahnrad auf der zweiten Welle verbindet, und dass das Getriebe ein Ausrichtsystem für eine Einstellmöglichkeit der Drehwinkelposition zwischen der ersten Welle und der zweiten Welle aufweist.

Nach Anspruch 4 ist die Einstellung der Drehwinkelposition zwischen der ersten Welle und der zweiten Welle in der Art genau definiert, dass die beiden Wellen mit den darauf ausgerichteten scheibenförmigen Prüfkörpern über das Getriebe und dessen Ausrichtsystem so zueinander in Verdrehrichtung ausgerichtet sind und durch die Belastungseinrichtung so gegeneinander belastet werden, dass in einer ersten Verdrehposition der beiden scheibenförmigen Prüfkörper der erste Konturpunkt des ersten scheibenförmigen Prüfkörpers und der zweite Konturpunkt des zweiten scheibenförmigen Prüfkörpers in Kontakt kommen, und dass in einer um 180° dazu versetzten Verdrehposition der beiden scheibenförmigen Prüfkörper der zweite Konturpunkt des ersten scheibenförmigen Prüfkörpers und der erste Konturpunkt des zweiten scheibenförmigen Prüfkörpers in Kontakt kommen.

Der Zahneingriff zweier Zahnflanken wird somit in diesem Modellprüfstand durch das Abwälzen und Gleiten zweier unrunder Teilprofile der beiden scheibenförmigen Prüfkörper während der Drehbewegung der Wellen mit konstanter Drehzahl um 180° abgebildet. Die Länge der Teilprofile entspricht der Eingriffslänge der Zahnflanken. Die scheibenförmigen Prüfkörper sind also wesentlich kleiner als die Zahnräder, deren Eingriffsverhältnisse auf dem erfindungsgemäßen Modellprüfstand abgebildet werden. Bei gleichen Bewegungsverhältnissen wie im realen Zahnradgetriebe kommen die zu testenden Teilprofile mit deutlich höheren Frequenzen in Eingriff. Die Testzeit auf so einem Modellprüfstand ist also wesentlich kürzer als eine Testzeit für gleiche Lastwechselzahlen auf einem Prüfstand mit realen Zahnradstufen.

Für die Ausgestaltung der Teilprofile der scheibenförmigen Prüfkörper zwischen den ersten und zweiten Konturpunkten wird nach Anspruch 5 vorgeschlagen, dass das erste Teilprofil und das zweite Teilprofil der unrunden Außenkonturen der beiden scheibenförmigen Prüfkörper zwischen den ersten Konturpunkten und den zweiten Konturpunkten so ausgestaltet sind, dass in jeder Verdrehposition der ersten Welle und der zweiten Welle eine gemeinsame Kontaktnormale der sich berührenden unrunden Konturen durch einen ortsfesten Wälzpunkt verläuft, der genau auf der Mitte eines konstanten Achsabstands zwischen den ortsfesten Zentren der beiden scheibenförmigen Prüfkörper liegt.

Aus der Bedingung des konstanten Achsabstandes nach Anspruch 5, der konstanten Übersetzung i=-1 nach Anspruch 3 und dem Verzahnungsgesetz, nach dem die gemeinsame Kontaktnormale zweier in Eingriff stehender Teilprofile durch einen Wälzpunkt verläuft, der auf einer durch die konstante Übersetzung fest definierten Position auf der Verbindung der beiden Wellenmitten in der Stirnschnittebene liegt, ist der Verlauf der Teilprofile zwischen den ersten und zweiten Konturpunkten eindeutig über die Vorgaben der Scheibendrehzahlen sowie der Verläufe der Summengeschwindigkeiten und der Gleitgeschwindigkeiten definiert. Diese Kontur lässt sich z.B. in Polarkoordinaten bzgl. des Zentrums der Prüfscheiben beschreiben, mittels derer die CNC-Maschinen zur Herstellung der scheibenförmigen Prüfkörper bedatet werden.

Bei scheibenförmigen Prüfkörpern mit kreisrunder Außenkontur und dem Zentrum in Scheibenmitte gehen die Eingriffsnormalen immer durch die Scheibenmitten. Aus einer Kontaktnormalkraft ergibt sich somit kein Torsionsmoment um die Scheibenmitte. Bei scheibenförmigen Prüfkörpern mit unrunder Außenkontur und einem Zentrum, das nicht mittig zwischen den ersten und zweiten Konturpunkten liegt, ist das nicht der Fall. In dem Modellprüfstand der bisher beschriebenen Art gibt es Betriebspunkte, in denen aus der Kontaktnormalbelastung erhebliche Torsionsmomente entstehen. Bei einer Umdrehung der Wellen entstehen dann stark wechselnde Torsionsmomente, die über das Getriebe zwischen den Wellen abgestützt würden. Das Getriebe würde dadurch mit hohen Frequenzen stark wechselnd belastet. Das würde insbesondere infolge der geringen und periodisch schwankenden Kontaktsteifigkeiten im Getriebe zur Anregung von Drehschwingungen führen.

Um das zu vermeiden ist nach Anspruch 6 vorgesehen, dass auf der ersten Welle in einer zweiten Stirnschnittebene ein dritter scheibenförmiger Prüfkörper mit identischer unrunder Außenkontur wie beim ersten scheibenförmigen Prüfkörper sitzt, und zwar mit seiner ersten Bohrung koaxial zur ersten Bohrung des ersten scheibenförmigen Prüfkörpers, aber gegenüber dem ersten scheibenförmigen Prüfkörper um 180° versetzt ausgerichtet, und dass auf der zweiten Welle ebenfalls in der zweiten Stirnschnittebene ein vierter scheibenförmiger Prüfkörper mit identischer unrunder Außenkontur wie beim zweiten scheibenförmigen Prüfkörper sitzt, und zwar ebenfalls mit seiner ersten Bohrung koaxial zur ersten Bohrung des zweiten scheibenförmigen Prüfkörpers, aber ebenfalls gegenüber dem zweiten scheibenförmigen Prüfkörper um 180° versetzt ausgerichtet.

Durch diese um 180° versetzte Anordnung von zwei scheibenförmigen Prüfkörpern mit unrunder Außenkontur in zwei parallelen Stirnschnittebenen auf jeder Welle wird erreicht, dass sich die stark wechselnden Torsionsmomente aus den Kontakten in beiden Stirnschnittebenen auf einer Welle über einen kurzen und damit steifen Wellenabschnitt ausgleichen. Das Getriebe wird dadurch nicht dynamisch belastet. Die Schwingungsanregungen fallen gering aus.

Dafür ist es natürlich auch wichtig, dass die scheibenförmigen Prüfkörper fest auf den Wellen montiert werden. Nach dem Anspruch 7 ist dazu vorgesehen, dass die erste Welle und die zweite Welle jeweils zwischen einem freien Wellenende und einem getriebeseitigen Wellenende ein Mittenteil aufweisen mit daran anschließenden Zentrierabsätzen für Prüfkörper zur Zentrierung der scheibenförmigen Prüfkörper über deren erste Bohrungen und wiederum daran anschließenden Zentrierabsätzen für Klemmstücke und dass die beiden Mittenteile der Wellen radiale Anschlagzapfen mit Formelementen zur Ausrichtung der scheibenförmigen Prüfkörper über deren zweite Bohrungen und weitere Passelemente aufweisen und dass die scheibenförmigen Prüfkörper über Klemmstücke und Schraubenverbindungen für Prüfkörper gegen die radialen Anschlagzapfen verspannt werden.

Die scheibenförmigen Prüfkörper werden mit einem leichten Presssitz auf den Wellen zentriert, mittels Passelementen in den zweiten Bohrungen spielfrei ausgerichtet und über Reibschluss und Formschluss gehalten. Die dafür nötigen Schraubverbindungen weisen Dehnschrauben auf, die mit Muttern fixiert werden. Das Mittelteil der Wellen und die Klemmstücke haben keine Gewinde und können deshalb auch nach vielen Prüfkörperwechseln immer weiterverwendet werden.

In dem nun so erweiterten Aufbau des erfindungsgemäßen Modellprüfstands werden nun gleichzeitig zwei Prüfkörperpaare belastet und relativ zueinander bewegt. Für eine eindeutige Belastung beider Prüfkörperpaare könnte der Modellprüfstand zwei Belastungseinrichtungen aufweisen. Diese müssten dann aber stets die gleiche Last aufbringen, damit sich die oben beschriebenen wechselnden Torsionsmomente tatsächlich auf jeder Welle aufheben.

Um das mit einer einzigen Belastungseinrichtung immer zu gewährleisten, ist nach Anspruch 8 der Modellprüfstand dadurch gekennzeichnet, dass die Belastungseinrichtung in einer dritten Stirnschnittebene liegt, die mittig zwischen der ersten Stirnschnittebene und der zweiten Stirnschnittebene liegt, und dass die Wirklinie der Belastung aus der Belastungseinrichtung die Mittellinien beider Wellen schneidet.

Durch die mittige Anordnung der dritten Stirnschnittebene zwischen der ersten und der zweiten Stirnschnittebene ergibt sich automatisch eine gleichmäßige Aufteilung der Belastungskraft auf die Kontakte in den beiden äußeren Stirnschnittebenen. Durch die Ausrichtung der Wirklinie durch die beiden Wellenmitten ergeben sich alle 180° periodisch wiederholende Kontaktkraftverläufe.

Nach Anspruch 9 ist zudem vorgesehen, dass die Belastungseinrichtung einen servo-hydraulischen oder einen elektro-magnetischen Aktuator beinhaltet, der die Belastungskraft in jeder halben Wellenumdrehung von Null bis zu einem Maximalwert und wieder bis Null verändern kann.

Durch die unrunde Außenkontur der scheibenförmigen Prüfkörper ergeben sich auch schon bei konstanter Belastungskraft Pressungsverläufe, die sehr gut den Pressungsverläufen in den Zahneingriffen von Stirnradgetrieben mit heute üblichen Verzahnungskorrekturen entsprechen. Durch hochdynamische Aktuatoren können aber auch Sonderereignisse wie Eintrittsstöße nachgebildet werden.

Nach Anspruch 10 ist zuletzt noch vorgesehen, dass die Belastungseinrichtung einen Abhebemechanismus beinhaltet, der das zweite Gestell alle 180° Verdrehwinkel vom ersten Gestell um wenige Zehntelmillimeter abheben kann.

Ein Abhebemechanismus ist in dem erfindungsgemäßen Modellprüfstand nicht zwingend erforderlich wie in dem Modellprüfstand nach der DE 36 04 653 A1. Er ließe sich aber nutzen, um den Eingriffsbeginn mit der Verdrängung eines Ölvolumens aus den sich annähernden Zahnflanken noch realitätsnäher nachzubilden.

Die Erfindung ist nicht nur auf die Merkmale ihrer Ansprüche beschränkt. Denkbar und vorgesehen sind auch Kombinationsmöglichkeiten einzelner Anspruchsmerkmale und Kombinationsmöglichkeiten einzelner Anspruchsmerkmale mit dem in den Vorteilsangaben und zu den Ausgestaltungsbeispielen Offenbarten.

Die Erfindung bezieht sich insbesondere auch auf nach dem Stand der Technik gleichwirkende Lösungen.

Ein vorzugsweises Ausführungsbeispiel des erfindungsgemäßen Modellprüfstandes ist in den Fig. 1 bis 8 dargestellt und bezüglich der Gestalt der scheibenförmigen Prüfkörper, der Ausgestaltung der beiden Wellen, den Lagerungen der Wellen in den Gestellen, des Getriebes samt Ausrichtsystem zwischen den Wellen, des Antriebsmotors und der Belastungseinrichtung und bezüglich des prinzipiellen Zusammenwirkens aller Bauteile erläutert. Dabei zeigen:
- Fig. 1: den Gesamtaufbau des erfindungsgemäßen Modellprüfstands mit Antriebsmotor und Belastungseinrichtung in einer dreidimensionalen Darstellung,
- Fig. 2: den Gesamtaufbau des erfindungsgemäßen Modellprüfstands ohne Antriebsmotor und Teile der Belastungseinrichtung in einer vergrößerten Darstellung,
- Fig. 3: einen Frontalschnitt durch die Anordnung der Wellen mit den scheibenförmigen Prüfkörpern in den Gestellen zur Klarstellung der Lagen der drei Stirnschnittebenen,
- Fig. 4: einen Schnitt durch eine Prinzipdarstellung des Modellprüfstands in der ersten Stirnschnittebene,
- Fig. 5: die Geometrie der scheibenförmigen Prüfkörper in einer Stirnschnittebene,
- Fig. 6: die Gestaltung der beiden Wellen samt den darauf montierten Prüfkörpern,
- Fig. 7: die beiden komplett montierten Wellen in der relativen Lage bei ϕ=0°,
- Fig. 8: die Relativpositionen der scheibenförmigen Prüfkörper in beiden Stirnschnittebenen in fünf verschiedenen Eingriffspositionen,

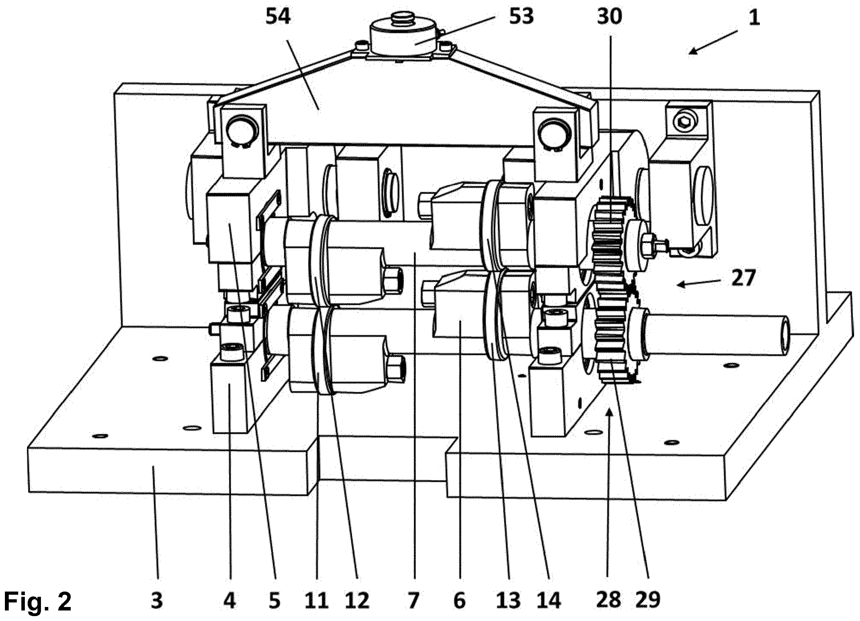

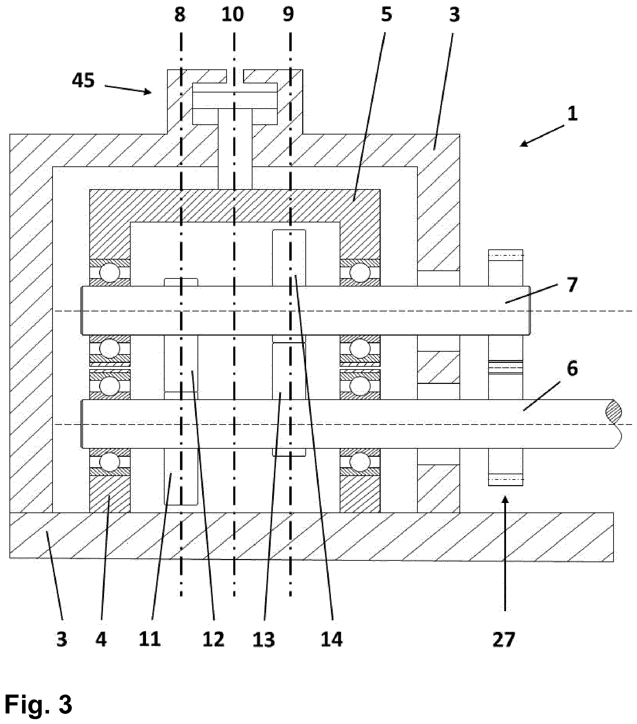

Die Fig. 1 und 2 zeigen den erfindungsgemäßen Modellprüfstand 1 in einer dreidimensionalen Darstellung. Fig. 1 zeigt dabei den erfindungsgemäßen Modellprüfstand 1 mit Antriebsmotor 2 und Belastungseinrichtung 45. Fig. 2 zeigt den erfindungsgemäßen Modellprüfstand 1 ohne Antriebsmotor 2 und ohne Teile der Belastungseinrichtung 45 in einer vergrößerten Darstellung. Fig. 3 zeigt zudem den erfindungsgemäßen Modellprüfstand 1 in einer mehr prinzipiellen Darstellung und verdeutlicht dazu in einem Frontalschnitt die relativen Lagen der Bauteile zueinander.

Im Modellprüfstand nach Fig. 1 treibt der Antriebsmotor 2 eine erste Welle 6, die in einem ersten Gestell 4 gelagert ist. Das erste Gestell 4 ist fest mit einem Rahmen 3 verbunden. Über ein Getriebe 27 treibt der Antriebsmotor 2 auch eine zweite Welle 7, die in einem zweiten Gestell 5 gelagert ist. Dieses zweite Gestell 5 ist in der Art beweglich mit dem Rahmen 3 verbunden, dass sich der Achsabstand zwischen beiden Wellen 6 und 7 so verändern lässt, dass dabei die Drehachsen der beiden Wellen 6 und 7 parallel bleiben.

Aus den Fig. 1 bis 3 wird deutlich, dass jede der beiden Wellen 6 und 7 zwei scheibenförmige Prüfkörper trägt. Die scheibenförmigen Prüfkörper 11 und 13 sitzen auf der ersten Welle 6 und die scheibenförmigen Prüfkörper 12 und 14 sitzen auf der zweiten Welle 7. Fig. 3 verdeutlicht die axiale Lage der scheibenförmigen Prüfkörper 11 bis 14 auf beiden Wellen 6 und 7. In einer ersten Stirnschnittebene 8 berühren sich der erste scheibenförmige Prüfkörper 11 auf der ersten Welle 6 und der zweite scheibenförmige Prüfkörper 12 auf der zweiten Welle 7. In einer zweiten Stirnschnittebene 9 berühren sich der dritte scheibenförmige Prüfkörper 13 auf der ersten Welle 6 und der vierte scheibenförmige Prüfkörper 14 auf der zweiten Welle 7.

Die Belastungseinrichtung 45, die in vielen Details in Fig. 1 zu sehen ist, erzeugt eine Kraft zwischen den beiden Wellen 6 und 7 auf einer Wirklinie 46 zwischen den beiden Wellenmitten, die in Fig. 4 zu sehen ist. Ein servo-hydraulischer oder elektromagnetischer Aktuator 47 stützt sich am Rahmen 3 ab und drückt eine Schubstange 52 über eine Kraftmessdose 53 gegen eine Traverse 54, die über Gelenke mit dem zweiten Gestell 5 verbunden ist. Wie aus Fig. 3 hervorgeht, liegt die Belastungseinrichtung in einer dritten Stirnschnittebene 10 genau mittig zwischen der ersten Stirnschnittebene 8 und der zweiten Stirnschnittebene 9. Dadurch wird gewährleistet, dass sich die Kraft aus der Belastungseinrichtung 45 gleichmäßig auf die zwei scheibenförmigen Prüfkörper 11 und 13 bzw. 12 und 14 jeder Welle 6 und 7 aufteilt. Ein hier nicht näher ausgeführter Abhebemechanismus 48 kann noch zwischen dem ersten Gestell 4 und dem zweiten Gestell 5 wirken, um die scheibenförmigen Prüfkörper kurzzeitig und für wenige Zehntelmillimeter außer Kontakt zu bringen. Dadurch kann der erste Kontakt zweier in Eingriff kommender Zahnflanken noch realitätsnäher abgebildet werden.

Fig. 4 zeigt in einer ebenfalls mehr prinzipiellen Darstellung einen Schnitt in der ersten Stirnschnittebene 8 durch den Modellprüfstand 1. Hier ist gut zu erkennen, wie die Belastungseinrichtung 45 eine Druckbelastung zwischen dem ersten Gestell 4 auf dem Rahmen 3 und dem zweiten Gestell 5 erzeugt, deren Wirklinie 46 die Mittellinien beider Wellen 6 und 7 kreuzt. Die Belastungseinrichtung 45 soll vorzugsweise einen servo-hydraulischen Aktuator oder einen elektro-magnetischen Aktuator 47 aufweisen, die beide für das Aufbringen dynamischer Lastkollektive geeignet sind. Außerdem ist in Fig. 4 gut zu erkennen, dass der erste scheibenförmige Prüfkörper 11 und der zweite scheibenförmige Prüfkörper 12 eine unrunde Außenkontur 20 mit stetig veränderlicher Krümmung haben.

Aus Fig. 5 gehen Details der Ausgestaltung der scheibenförmigen Prüfkörper 11 bis 14 und deren unrunder Außenkonturen 20 hervor. So eine Außenkontur 20 hat ein erstes Teilprofil 21 und ein zweites Teilprofil 22, die auf gegenüberliegenden Seiten einer Symmetrielinie 18 liegen und durch Spiegelung an dieser Symmetrielinie 18 ineinander übergehen. Die scheibenförmigen Prüfkörper 11 bis 14 haben je ein Zentrum 15 des Prüfkörpers, das auf der Symmetrielinie 18 liegt mit einem kleinsten Konturabstand 23 zu einem Schnittpunkt der Symmetrielinie 18 mit der unrunden Außenkontur 20 in einem ersten Konturpunkt 25 und einem größten Konturabstand 24 zum anderen Schnittpunkt der Symmetrielinie 18 mit der unrunden Außenkontur 20 im zweiten Konturpunkt 26.

Aus der Fig. 5 geht darüber hinaus hervor, dass jeder scheibenförmige Prüfkörper 11 bis 14 eine erste Bohrung 16 aufweist, deren Mitte im Zentrum des Prüfkörpers 15 liegt, und dass der scheibenförmigen Prüfkörper eine zweite Bohrung 17 aufweist, deren Mitte vorzugsweise auf der Symmetrielinie 18 zwischen dem Zentrum des Prüfkörpers 15 und dem zweiten Konturpunkt 26 mit dem größten Konturabstand 24 liegt.

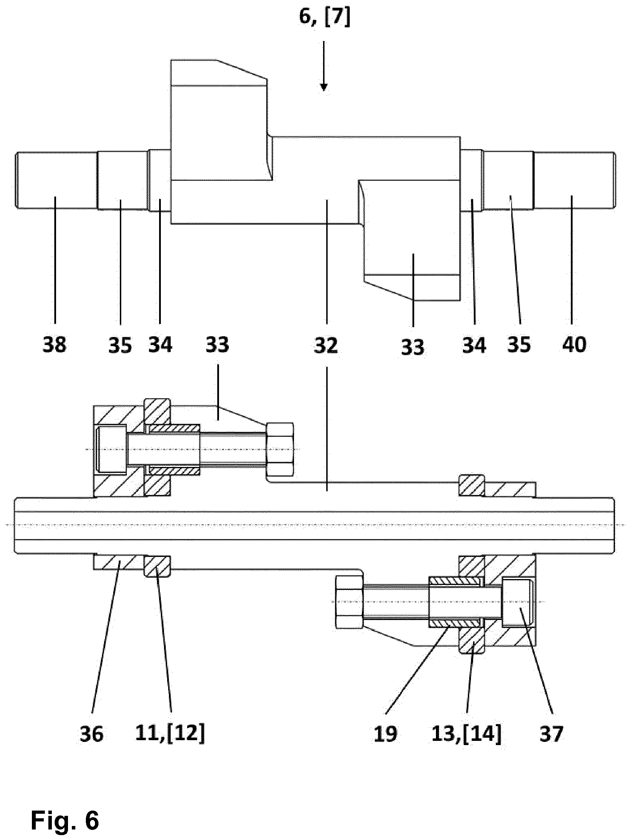

Fig. 6 verdeutlicht die identische Gestalt der ersten Welle 6 und der zweiten Welle 7. Beide Wellen 6 und 7 haben ein freies Wellenende 38 und ein getriebeseitiges Wellenende 40. Zwischen diesen Wellenenden 38 und 40 hat jede Welle 6 und 7 ein Mittelteil 32 mit daran an beiden Seiten anschließenden Zentrierabsätzen für die Prüfkörper 34 und daran anschließenden Zentrierabsätzen für Klemmstücke 35. Die Zentrierabsätze für die Prüfkörper 34 durchstoßen auf einer Seite des jeweiligen Mittelteils 32 die erste Stirnschnittebene 8 und auf der anderen Seite des Mittelteils 32 die zweite Stirnschnittebene 9. An den beiden Enden des Mittelteils 32 zu den Zentrierabsätzen für die Prüfkörper 34 hin weisen die Mittelteile 32 radiale Anschlagzapfen mit Formelementen 33 auf. Die beiden radialen Anschlagzapfen mit Formelementen 33 eines Mittelteils 32 weisen in entgegengesetzte Richtung.

Fig. 6 verdeutlicht darüber hinaus, wie die scheibenförmigen Prüfkörper 11 und 13 auf der Welle 6 bzw. die scheibenförmigen Prüfkörper 12 und 14 auf der Welle 7 zentriert und ausgerichtet sind. Die scheibenförmige Prüfkörper 11 [12] und 13 [14] werden mittels ihrer ersten Bohrungen 16 auf den Zentrierabsätzen für Prüfkörper 34 auf der Welle 6 [7] zentriert. Mittels der zweiten Bohrungen 17 und weiterer Passelemente 19 werden die scheibenförmigen Prüfkörper 11 [12] und 13 [14] auf der Welle 6 [7] zu korrespondierenden Bohrungen in den radialen Anschlagzapfen mit Formelementen 33 ausgerichtet. Auf die Zentrierabsätze für Klemmstücke 35 werden dann Klemmstücke 36 aufgesetzt und über Schraubenverbindungen für Prüfkörper 37 mit den radialen Anschlagzapfen 33 verspannt.

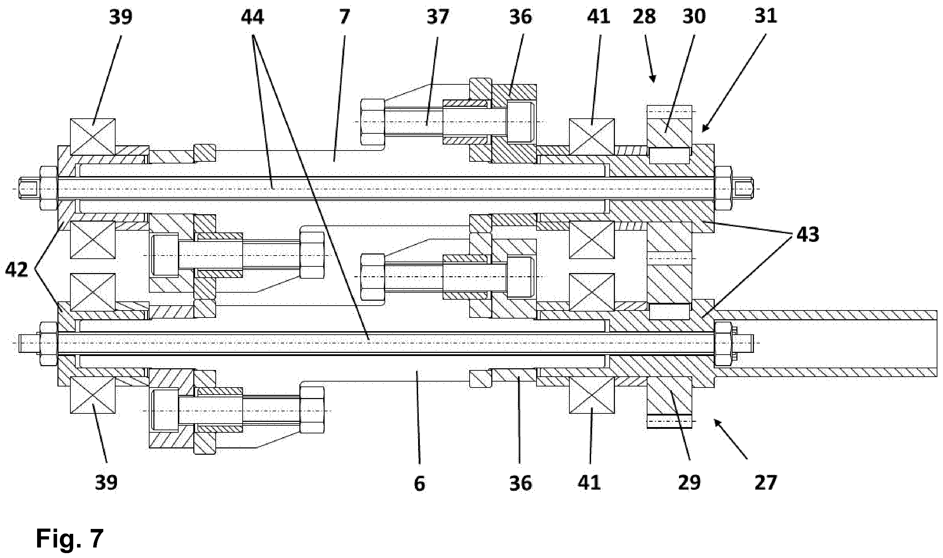

Fig. 7 verdeutlicht dann noch, wie die Lagerungen am freien Wellenende 39 und die Lagerungen am getriebeseitigen Wellenende 41 nach dem Stand der Technik über eine Hülse 42 am freien Wellenende 38 und eine Zahnradhülse 43 am getriebeseitigen Wellenende 40 der beiden Wellen 6 und 7 und weitere nicht näher bezeichnete Abstandshülsen fixiert werden. Zudem zeigt Fig. 7 das Getriebe 27, das die Drehzahlen der beiden Wellen 6 und 7 mit der Übersetzung i=-1 koppelt. Das Getriebe besteht aus einer Stirnradstufe 28 mit einem ersten Zahnrad 29 auf der ersten Welle 6 und einem zweiten Zahnrad 30 auf der zweiten Welle 7 sowie einem Ausrichtsystem 31. Beide Zahnräder 29 und 30 haben die gleiche, vorzugsweise ungerade Zähnezahl. Sie sitzen verdrehfest auf Zahnradhülsen 43, die stirnseitig direkt oder über weitere Abstandshülsen mit den getriebeseitigen Klemmstücken 36 in Kontakt stehen. Das Ausrichtsystem 31 besteht in der Verdrehmöglichkeit der Zahnradhülsen 43 auf den getriebeseitigen Wellenenden 40 und Dehnschraubenverbindungen für die Wellen 44, mit denen ein axialer Kraftschluss zwischen den Hülsen 42 am freien Wellenende 38 und den Zahnradhülsen 43 am getriebeseitigen Wellenende 40 über die Wellen 6 bzw. 7 und eventuell weitere Hülsen hergestellt wird.

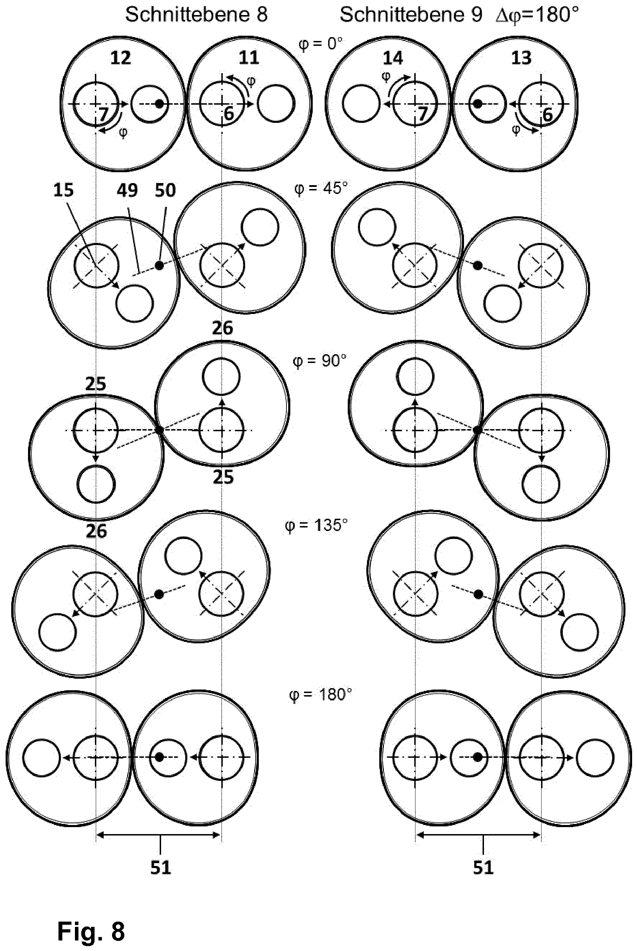

Die Fig. 8 zeigt abschließend die scheibenförmigen Prüfkörper 11 bis 14 auf beiden Wellen 6 und 7 in beiden Stirnschnittebenen 8 und 9. Die scheibenförmigen Prüfkörper 13 und 14 in der zweiten Stirnschnittebene 9 sind um 180° gegenüber den scheibenförmigen Prüfkörpern 11 und 12 in der ersten Stirnschnittebene 8 verdreht. In beiden Stirnschnittebenen 8 und 9 sind die Kontaktverhältnisse zwischen den sich berührenden Prüfkörpern in fünf unterschiedlichen relativen Verdrehpositionen dargestellt, die mit ϕ=0°, ϕ=45°, ϕ=90°, ϕ=135° und ϕ=180° bezeichnet sind. Die Welle 6 dreht dabei entgegen dem Uhrzeigersinn und die Welle 7 im Uhrzeigersinn. In der Verdrehposition ϕ=90° sind die ersten Konturpunkte 25 und die zweiten Konturpunkte 26 an den scheibenförmigen Prüfkörpern 11 und 12 markiert. In der Verdrehposition ϕ=0° berühren sich der erste Konturpunkt 25 des Prüfkörpers 11 und der zweite Konturpunkt 26 des Prüfkörpers 12. In der Verdrehposition ϕ=180° berühren sich der zweite Konturpunkt 26 des Prüfkörpers 11 und der erste Konturpunkt 25 des Prüfkörpers 12. In den Verdrehpositionen ϕ=0°, ϕ=180° verläuft die Kontaktnormale 49 durch die beiden Zentren der Prüfkörper 15. In den anderen drei Relativpositionen ϕ=45°, ϕ=90° und ϕ=135° ist dies nicht der Fall. In allen Relativpositionen verläuft die Kontaktnormale aber durch einen Wälzpunkt 50, der bei einer Getriebeübersetzung von i=-1 genau mittig zwischen den beiden Wellenmitten liegt. Bei Vorgabe des kleinsten Konturabstands 23 und des größten Konturabstands 24 sowie der Übersetzung i=-1 lässt sich die unrunde Außenkontur 20 aller Prüfkörper exakt so gestalten, dass sich in allen Relativpositionen die beiden Prüfkörper 11 und 12 bei konstantem Achsabstand 51 berühren.

Fig. 8 zeigt auf der linken Seite die Kontaktverhältnisse in den Kontakten der scheibenförmigen Prüfkörper 11 und 12 in der ersten Stirnschnittebene 8. Auf der rechten Seite sind die jeweils zu gleichen Zeitpunkten vorliegenden Kontaktverhältnisse in der zweiten Stirnschnittebene 9 zwischen den scheibenförmigen Prüfkörpern 13 und 14 dargestellt. An den Richtungen der Kontaktnormalen 49 in allen Verdrehpositionen erkennt man, dass die aus den Kontaktnormalkräften resultierenden Torsionsmomente um die Wellenmitten 15 jeder Welle 6 und 7 in den beiden Stirnschnittebenen 8 und 9 unterschiedliches Vorzeichen haben. Das führt dazu, dass sich diese Torsionsmomente auf einer Welle über die kurzen und steifen Mittelteile 32 der Wellen 6 und 7 kurzschließen. Diese relativ großen Teildrehmomente belasten somit nicht die Stirnradstufe 28 des Getriebes 27. Die Teildrehmomente aus der Kontaktreibung heben sich zum Teil auch auf. Es bleibt aber ein geringes Restdrehmoment aus dem nicht kompensierten Teil der Reibungsmomente, das über den Antriebsmotor 2 aufgebracht werden muss. Bei exakter Ausrichtung aller Bauteile nach dieser Beschreibung ändert sich das Vorzeichen der Drehmomentbelastung in der Stirnradstufe 28 nicht. So können Schwingungsanregungen aus einem Flankenwechsel in den Zahneingriffen der Stirnradstufe 28 vermieden werden.

### Bezugszeichenliste

- 1: Modellprüfstand
- 2: Antriebsmotor
- 3: Rahmen
- 4: erstes Gestell
- 5: zweites Gestell
- 6: erste Welle
- 7: zweite Welle
- 8: erste Stirnschnittebene
- 9: zweite Stirnschnittebene
- 10: dritte Stirnschnittebene
- 11: erster scheibenförmiger Prüfkörper
- 12: zweiter scheibenförmiger Prüfkörper
- 13: dritter scheibenförmiger Prüfkörper
- 14: vierter scheibenförmiger Prüfkörper
- 15: Zentrum des Prüfkörpers
- 16: erste Bohrung
- 17: zweite Bohrung
- 18: Symmetrielinie
- 19: Passelement
- 20: unrunde Außenkontur mit stetig veränderlicher Krümmung
- 21: erstes Teilprofil
- 22: zweites Teilprofil
- 23: kleinster Konturabstand
- 24: größter Konturabstand
- 25: erster Konturpunkt
- 26: zweiter Konturpunkt
- 27: Getriebe
- 28: Stirnradstufe
- 29: erstes Zahnrad
- 30: zweites Zahnrad
- 31: Ausrichtsystem
- 32: Mittelteil
- 33: radialer Anschlagzapfen mit Formelementen
- 34: Zentrierabsatz für Prüfkörper
- 35: Zentrierabsatz für Klemmstück
- 36: Klemmstück
- 37: Schraubenverbindung für Prüfkörper
- 38: freies Wellenende
- 39: Lagerung am freien Wellenende
- 40: getriebeseitiges Wellenende
- 41: Lagerung am getriebeseitigen Wellenende
- 42: Hülse am freien Wellenende
- 43: Zahnradhülse
- 44: Dehnschraubenverbindung für Welle
- 45: Belastungseinrichtung
- 46: Wirklinie der Belastung
- 47: servo-hydraulischer oder elektro-magnetischer Aktuator
- 48: Abhebemechanismus
- 49: Kontaktnormale
- 50: Wälzpunkt
- 51: Achsabstand
- 52: Schubstange
- 53: Kraftmessdose
- 54: Traverse

## Patentansprüche

1. Modellprüfstand (1) für tribologische Untersuchungen an scheibenförmigen Prüfkörpern (11, 12) mit einer ersten Welle (6), die in einem ersten Gestell (4) gelagert ist und von einem Antriebsmotor (2) angetrieben wird und einen ersten scheibenförmigen Prüfkörper (11) in einer ersten Stirnschnittebene (8) trägt, und mit einer zweiten Welle (7), die in einem zweiten Gestell (5) parallel zur ersten Welle (6) gelagert ist und die von der ersten Welle (6) aus über ein Getriebe (27) angetrieben wird und einen zweiten scheibenförmigen Prüfkörper (12) in der ersten Stirnschnittebene (8) trägt, wobei das erste Gestell (4) fest in einem Rahmen (3) sitzt und das zweite Gestell (5) beweglich in dem Rahmen (3) gelagert ist, und mit einer Belastungseinrichtung (45) zwischen dem ersten Gestell (4) und dem zweiten Gestell (5), **dadurch gekennzeichnet,**
**dass** der erste scheibenförmige Prüfkörper (11) und der zweite scheibenförmige Prüfkörper (12) jeweils eine unrunde Außenkontur (20) mit stetig veränderlicher Krümmung in der ersten Stirnschnittebene (8) aufweisen mit einem ersten Teilprofil (21) und einem zweiten Teilprofil (22), die auf gegenüberliegenden Seiten einer Symmetrielinie (18) liegen und durch Spiegelung an dieser Symmetrielinie (18) ineinander übergehen, und dass beide scheibenförmige Prüfkörper (11, 12) ein Zentrum des Prüfkörpers (15) haben, das auf der Symmetrielinie (18) liegt mit einem kleinsten Konturabstand (23) zu einem Schnittpunkt der Symmetrielinie (18) mit der unrunden Außenkontur (20) in einem ersten Konturpunkt (25) und einem größten Konturabstand (24) zum anderen Schnittpunkt der Symmetrielinie (18) mit der unrunden Außenkontur (20) in einem zweiten Konturpunkt (26)-

2. Modellprüfstand (1) nach Anspruch 1,
**dadurch gekennzeichnet,**
**dass** der erste und der zweite scheibenförmige Prüfkörper (11 und 12) je eine erste Bohrung (16) aufweisen, deren Mitte im Zentrum des Prüfkörpers (15) liegt, und dass die scheibenförmigen Prüfkörper (11 und 12) je eine zweite Bohrung (17) aufweisen, deren Mitte vorzugsweise auf der Symmetrielinie (18) zwischen dem Zentrum des Prüfkörpers (15) und dem zweiten Konturpunkt (26) mit dem größten Konturabstand (24) liegt, und dass die scheibenförmigen Prüfkörper (11 und 12) mittels der ersten Bohrungen (16) auf Zentrierabsätzen für Prüfkörper (33) auf den Wellen (6 und 7) zentriert werden und dass die scheibenförmigen Prüfkörper (11 und 12) mittels der zweiten Bohrungen (17) und weiterer Passelemente (19) auf den Wellen (6 und 7) ausgerichtet werden.

3. Modellprüfstand (1) nach mindestens einem der Ansprüche 1 und 2,
**dadurch gekennzeichnet,**
**dass** das Getriebe (27) die erste Welle (6) und die zweite Welle (7) über eine Stirnradstufe (28) mit einer konstanten Übersetzung von i=-1 zwischen einem ersten Zahnrad (29) auf der ersten Welle (6) und einem zweiten Zahnrad (30) auf der zweiten Welle (7) verbindet, und dass das Getriebe (27) ein Ausrichtsystem (31) für eine Einstellmäglichkeit der Drehwinkelposition zwischen der ersten Welle (6) und der zweiten Welle (7) aufweist.

4. Modellprüfstand (1) nach mindestens einem der Ansprüche 1 bis 3,
**dadurch gekennzeichnet,**
**dass** die beiden Wellen (6 und 7) mit den darauf ausgerichteten scheibenförmigen Prüfkörpern (11 und 12) über das Getriebe (27) und dessen Ausrichtsystem (31) so zueinander in Verdrehrichtung ausgerichtet sind und durch die Belastungseinrichtung (45) so gegeneinander belastet werden, dass in einer ersten Verdrehposition der beiden scheibenförmigen Prüfkörper (11 und 12) der erste Konturpunkt (25) des ersten scheibenförmigen Prüfkörpers (11) und der zweite Konturpunkt (26) des zweiten scheibenförmigen Prüfkörpers (12) in Kontakt kommen, und dass in einer um 180° dazu versetzten Verdrehposition der beiden scheibenförmigen Prüfkörper (11 und 12) der zweite Konturpunkt (26) des ersten scheibenförmigen Prüfkörpers (11) und der erste Konturpunkt (25) des zweiten scheibenförmigen Prüfkörpers (12) in Kontakt kommen.

5. Modellprüfstand (1) nach mindestens einem der Ansprüche 1 bis 4,
**dadurch gekennzeichnet,**
**dass** das erste Teilprofil (21) und das zweite Teilprofil (22) der unrunden Außenkonturen (20) der beiden scheibenförmigen Prüfkörper (11 und 12) zwischen den ersten Konturpunkten (25) und den zweiten Konturpunkten (26) so ausgestaltet sind, dass in jeder Verdrehposition der ersten Welle (6) und der zweiten Welle (7) eine gemeinsame Kontaktnormale (49) der sich berührenden unrunden Konturen (20) durch einen ortsfesten Wälzpunkt (50) verläuft, der genau auf der Mitte eines konstanten Achsabstands (51) zwischen den ortsfesten Zentren (15) der beiden scheibenförmigen Prüfkörper (11 und 12) liegt.

6. Modellprüfstand (1) nach mindestens einem der Ansprüche 1 bis 5,
**dadurch gekennzeichnet,**
**dass** auf der ersten Welle (6) in einer zweiten Stirnschnittebene (9) ein dritter scheibenförmiger Prüfkörper (13) mit identischer unrunder Außenkontur (20) wie beim ersten scheibenförmigen Prüfkörper (11) sitzt, und zwar mit seiner ersten Bohrung (16) koaxial zur ersten Bohrung (16) des ersten scheibenförmigen Prüfkörpers (11), aber gegenüber dem ersten scheibenförmigen Prüfkörper (11) um 180° versetzt ausgerichtet, und dass auf der zweiten Welle (7) ebenfalls in der zweiten Stirnschnittebene (9) ein vierter scheibenförmiger Prüfkörper (14) mit identischer unrunder Außenkontur (20) wie beim zweiten scheibenförmigen Prüfkörper (12) sitzt, und zwar ebenfalls mit seiner ersten Bohrung (16) koaxial zur ersten Bohrung (16) des zweiten scheibenförmigen Prüfkörpers (12), aber ebenfalls gegenüber dem zweiten scheibenförmigen Prüfkörper (12) um 180° versetzt ausgerichtet.

7. Modellprüfstand (1) nach mindestens einem der Ansprüche 1 bis 6,
**dadurch gekennzeichnet,**
**dass** die erste Welle (6) und die zweite Welle (7) jeweils zwischen einem freien Wellenende (38) und einem getriebeseitigen Wellenende (40) ein Mittenteil (32) aufweisen mit daran anschließenden Zentrierabsätzen für Prüfkörper (34) zur Zentrierung der scheibenförmigen Prüfkörper (11, 12, 13, 14) über deren erste Bohrungen (16) und wiederum daran anschließenden Zentrierabsätzen für Klemmstücke (35) und dass die beiden Mittenteile (32) der Wellen (6 und 7) radiale Anschlagzapfen mit Formelementen (33) zur Ausrichtung der scheibenförmigen Prüfkörper (11, 12, 13, 14) über deren zweite Bohrungen (17) und weitere Passelemente (19) aufweisen und dass die scheibenförmigen Prüfkörper (11, 12, 13, 14) über Klemmstücke (36) und Schraubenverbindungen für Prüfkörper (37) gegen die radialen Anschlagzapfen (33) verspannt werden.

8. Modellprüfstand (1) nach mindestens einem der Ansprüche 1 bis 7,
**dadurch gekennzeichnet,**
**dass** die Belastungseinrichtung (45) in einer dritten Stirnschnittebene (10) liegt, die mittig zwischen der ersten Stirnschnittebene (8) und der zweiten Stirnschnittebene (9) liegt, und dass die Wirklinie der Belastung (46) aus der Belastungseinrichtung (45) die Mittellinien beider Wellen (6 und 7) schneidet.

9. Modellprüfstand (1) nach mindestens einem der Ansprüche 1 bis 8,
**dadurch gekennzeichnet,**
**dass** die Belastungseinrichtung (45) einen servo-hydraulischen oder einen elektro-magnetischen Aktuator (47) beinhaltet, der die Belastungskraft in jeder halben Wellenumdrehung von Null bis zu einem Maximalwert und wieder bis Null verändern kann.

10. Modellprüfstand (1) nach mindestens einem der Ansprüche 1 bis 9,
**dadurch gekennzeichnet,**
**dass** die Belastungseinrichtung (45) einen Abhebemechanismus (48) beinhaltet, der das zweite Gestell (5) alle 180° Verdrehwinkel vom ersten Gestell (4) um wenige Zehntelmillimeter abheben kann.

## Claims

1. Model test rig (1) for tribological tests on disc-shaped test specimens (11, 12) comprising a first shaft (6) which is carried in a first rack (4) and powered by a drive motor (2) and wherein the first shaft carries a first disc-shaped test specimen (11) in a first cross-section (8), and comprising a second shaft (7) which is carried in a second rack (5) parallel to the first shaft (6) and which is driven by the first shaft (6) via a gearbox (27),wherein the second shaft carries a second disc-shaped test specimen (12) in the first cross-section (8), wherein the first rack (4) is firmly mounted in a frame (3) and the second frame (5) is movably mounted in the frame (3), wherein the model test rig further comprises a load device (45) between the first frame (4) and the second frame (5),
**characterized in**
**that** the first disc-shaped test specimen (11) and the second disc-shaped test specimen (12) each have an non-circular outer contour (20) with steadily variable curvature in the first cross-section (8) with a first partial profile (21) and a second partial profile (22) which are located on opposite sides of a symmetry line (18) and merge into each other by mirroring at said symmetry line (18), wherein both disc-shaped test specimens (11, 12) have a center of the test specimen (15) which is located on the symmetry line (18) with a smallest contour distance (23) to an intersection point of the symmetry line (18) with the non-circular outer contour (20) in a first contour point (25) and with a largest contour distance (24) to the other intersection point of the symmetry line (18) with the non-circular outer contour (20) in a second contour point (26).

2. Model test rig (1) according to claim 1,
**characterized in**
**that** the first and second disc-shaped test specimens (11, 12) each comprise a first bore hole (16), which is located in the center of the test specimen (15), and that the disc-shaped test specimens (11, 12) each comprise a second bore hole (17), whose center is preferably located on the symmetry line (18) between the center of the test specimen (15) and the second contour point (26) with the largest contour distance (24), and that the disc-shaped test specimens (11, 12) are centered by means of the first bore holes (16) on centering sections for test specimens (34) on the shafts (6, 7) and that the disc-shaped test specimens (11, 12) are aligned on the shafts (6,7) by means of the second bore holes (17) and further fitting elements (19).

3. Model test rig (1) according to at least one of the claims 1 and 2,
**characterized in**
**that** the gearbox (27) links the first shaft (6) and the second shaft (7) via a spur gear stage (28) with a constant gear ratio of i=-1 between a first gear (29) on the first shaft (6) and a second gear (30) on the second shaft (7), wherein the gearbox (27) has an alignment system (31) for a setting of the rotary angle position between the first shaft (6) and the second shaft (7).

4. Model test rig (1) according to at least one of the claims 1 to 3,
**characterized in**
**that** the two shafts (6, 7), with the disk-shaped test specimens (11, 12) aligned on the shafts (6, 7), are aligned to each other in rotational direction via the gearbox (27) and its alignment system (31) and are loaded against each other by the load device (45) in such a way that in a first twisting position of the two disc-shaped test specimens (11, 12) the first contour point (25) of the first disc-shaped test specimen (11) and the second contour point (26) of the second disc-shaped test specimen (12) come into contact, and that in a 180°-offset twisting position of the two disc-shaped test specimens (11 and 12), the second contour point (26) of the first disc-shaped test specimen (11) and the first contour point (25) of the second disc-shaped test specimen (12) come into contact.

5. Model test rig (1) according to at least one of the claims 1 to 4,
**characterized in**
**that** the first partial profile (21) and the second partial profile (22) of the non-circular outer contours (20) of the two disc-shaped test specimens (11, 12) are designed in such a way between the first contour points (25) and the second contour points (26) that in each twisting position of the first shaft (6) and the second shaft (7) a common contact normal line (49) of the touching non-circular contours (20) runs through a fixed pitch point (50), which is located exactly in the middle of a constant center distance (51) between the fixed centers (15) of the two disc-shaped test specimens (11, 12).

6. Model test rig (1) according to at least one of the claims 1 to 5,
**characterized in**
**that** a third disc-shaped test specimen (13) with an identical non-circular outer contour (20) as the first disc-shaped test specimen (11) is mounted on the first shaft (6) in a second cross-section (9), in fact with its first hole (16) coaxially aligned to the first hole (16) of the first disc-shaped test body (11), but offset by 180° compared to the first disc-shaped test specimen (11), and that a fourth disc-shaped test specimen (14) with identical non-circular outer contour (20) as the second disc-shaped test specimen (12) is mounted on the second shaft (7) also in the second cross-section (9), also with its first hole coaxially aligned (16) to the first hole (16) of the second disc-shaped test specimen (12), but also offset by 180° to the second disc-shaped test specimen (12).

7. Model test rig (1) according to at least one of the claims 1 to 6,
**characterized in**
**that** the first shaft (6) and the second shaft (7) each have a center portion (32) between a free shaft end (38) and a gear-sided shaft end (40) having adjoining centering sections for test specimens (34) to center the disc-shaped test specimens (11, 12, 13, 14) on their first holes (16) and subsequent centering steps for clamp pieces (35), whereinthe two portions (32) of the shafts (6, 7) have radial stopper pins with shape elements (33) for aligning the disc-shaped test specimens (11, 12, 13, 14) by means of their second holes (17) and further fitting elements(19) and wherein the disc-shaped test specimens (11, 12, 13, 14) are clamped via clamp pieces (36) and screwed connections for test specimens (37) against the radial stoppers with shaped elements (33).

8. Model test rig (1) according to at least one of the claims 1 to 7,
**characterized in**
**that** the load device (45) is located in a third cross-section (10), which is located in the middle between the first cross-section (8) and the second cross-section (9), and that the line of action of the load (46) from the load device (45) cuts the center lines of both shafts (6, 7).

9. Model test rig (1) according to at least one of the claims 1 to 8,
**characterized in**
**that** the load device (45) contains a servo-hydraulic or an electro-magnetic actuator (47), which can arise the load force from zero to a maximum value and reduce it back to zero within every half shaft rotation.

10. Model test rig (1) according to at least one of the claims 1 to 9,
**characterized in**
**that** the load device (45) contains a lifting mechanism (48), which can lift the second rack (5) from the first rack (4) by a few tenths of a millimeter every 180° of shaft-rotation.

## Revendications

1. Modèle de banc d'essai (1) pour les tests tribologiques sur des spécimens en forme de disque (11, 12) avec un premier arbre (6) qui est monté dans un premier cadre (4) et entraîné par un moteur (2) et qui porte un premier spécimen en forme de disque (11) dans une première section transversale (8) et avec un deuxième arbre (7) qui est alimenté dans un deuxième cadre (5) parallèle au premier arbre (6) et qui est entraîné par le premier arbre (6) via une boîte de vitesses (27) et qui porte un deuxième spécimen en forme de disque (12) dans la première section transversale (8), avec le premier cadre (4) solidement fixé dans un châssis (3) et le deuxième cadre (5) monté de manière mobile dans le châssis (3), et avec un dispositif de charge (45) entre la première cadre (4) et la deuxième cadre (5),
**caractérisé en ce que**
le premier spécimen en forme de disque (11) et le deuxième spécimen en forme de disque (12) ont chacun un contour extérieur non circulaire (20) avec une courbure variable en permanence dans la première section transversale (8) avec un premier profil partiel (21) et un profil partiel second (22) qui sont situés sur les côtés opposés d'une ligne de symétrie (18) et fusionnent l'un dans l'autre en se reflétant à cette ligne de symétrie (18), dans laquelle les deux spécimens en forme de disque (11, 12) ont un centre (15) qui est situé sur la ligne de symétrie (18) avec une plus petite distance de contour (23) à un point d'intersection de la ligne de symétrie (18) avec le contour extérieur non circulaire (20) dans un premier point de contour (25) et avec une plus grande distance de contour (24) à l'autre point d'intersection de la ligne de symétrie (18) avec le contour extérieur non circulaire (20) dans un deuxième point de contour (26).

2. Modèle de banc d'essai (1) selon la revendication 1,
**caractérisé en ce**
**que** les premier et deuxième spécimens en forme de disque (11, 12) ont chacun un premier trou de forage (16), qui est situé au centre (15), et que les spécimens en forme de disque (11, 12) ont chacun un deuxième trou de forage(17), dont le centre est de préférence situé sur la ligne de symétrie (18) entre le centre (15) et le deuxième point de contour (26) avec la plus grande distance de contour (24), et que les spécimens en forme de disque (11, 12) sont centrées au moyen du premier trous de forage (16) sur les sections de centrage (34) sur les arbres (6, 7) et que les spécimen en forme de disque (11, 12) sont alignées sur les arbres (6, 7) au moyen des deuxièmes trous (17) et d'autres touches (19).

3. Modèle de banc d'essai (1) selon l'une des revendications 1 à 2,
**caractérisé en ce**
**que** la boîte de vitesses (27) relie le premier arbre (6) et le deuxième arbre (7) par un étage d'engrenages droits (28) avec un rapport constant de i=-1 entre une première roue dentée (29) montée sur le premier arbre (6) et une seconde roue dentée (30) montée sur le deuxième arbre (7), et que la boîte de vitesses (27) comprend un système d'alignement (31) pour un réglage de la position angulaire de rotation entre le premier arbre (6) et le deuxième arbre (7).

4. Modèle de banc d'essai (1) selon l'une des revendications 1 à 3,
**caractérisé en ce**
**que** les deux arbres (6, 7) avec les spécimens en forme de disque (11, 12) alignées sur ceux-ci sont alignés l'un par rapport à l'autre dans le sens de rotation via la boîte de vitesses (27) et de son système d'alignement (31) et sont chargés l'un contre l'autre par le dispositif de charge (45) de telle sorte que, dans une première position de rotation des deux spécimens en forme de disque (11, 12), le premier point de contour (25) du premier spécimen en forme de disque (11) et le deuxième point de contour (26) de la deuxième spécimen en forme de disque (12) entrent en contact, et que dans une position de rotation décalée de 180° des deux spécimens en forme de disque (11, 12), le deuxième point de contour (26) du premier spécimen en forme de disque (11) et le premier point de contour (25) du deuxième spécimen en forme de disque (12) entrent en contact.

5. Modèle de banc d'essai (1) selon l'une des revendications 1 à 4,
**caractérisé en ce**
**que** le premier profil partiel (21) et le deuxième profil partiel (22) des contours d'outer non circulaires (20) des deux spécimens en forme de disque (11, 12) sont conçus de telle manière entre les premiers points de contour (25) et t e deuxième point de contour (26) que dans chaque position de torsion du premier arbre (6) et du deuxième arbre (7) une ligne normale de contact commune (49) des contours non circulaires en contact (20) traverse un point de pas (50), situé exactement au milieu d'une distance centrale constante (51) entre les centres fixes (15) des deux spécimens en forme de disque (11, 12).

6. Modèle de banc d'essai (1) selon l'une des revendications 1 à 5,
**caractérisé en ce**
**qu'**un troisième spécimen en forme de disque (13) avec un contour extérieur non circulaire identique (20) à celui du premier spécimen en forme de disque (11) se trouve sur le premier arbre (6) dans une deuxième section transversale (9), en fait coaxialement aligné avec son premier trou (16) au premier trou (16) du premier spécimen en forme de disque (11), mais décalé de 180° par rapport au premier spécimen en forme de disque (11), et qu'un quatrième spécimen en forme de disque (14) avec un contour extérieur non circulaire identique (20) à celui du deuxième spécimen en forme de disque (12) se trouve sur le deuxième arbre (7) également dans la deuxième section transversale (9), également aligné coaxialement avec son premier trou (16) au premier trou (16) du deuxième spécimen en forme de disque (12), mais également décalé de 180° par rapport au deuxième spécimen en forme de disque (12) .

7. Modèle de banc d'essai (1) selon l'une des revendications 1 à 6,
**caractérisé en ce**
**que** le premier arbre (6) et le deuxième arbre (7) ont chacun une partie centrale (32) entre une extrémité d'arbre libre (38) et une extrémité d'arbre côté engrenage (40) ayant des sections de centrage adjacentes pour les éprouvettes d'essai (34) pour centrer les spécimens en forme de disque (11, 12, 13, 14) sur leurs premiers trous (16) et les sections de centrage suivantes pour les pièces de serrage (35) et que les deux parties centrale (32) des arbres (6, 7) ont des bouchons radiaux avec des éléments façonnés (33) pour aligner les spécimens en forme de disque (11, 12, 13, 14) au moyen de leurs deuxièmes trous (17) et d'autres clés (19) et que les spécimens en forme de disque (11, 12, 13, 14 ) sont serrés par des pièces de serrage (36) et des raccords vissés pour éprouvettes (37) contre les bouchons radiaux avec des éléments façonnés (33).

8. Modèle de banc d'essai (1) selon l'une des revendications 1 à 7,
**caractérisé en ce**
**que** le dispositif de chargement (45) est situé dans une troisième section transversale (10), qui est située au milieu entre la première section transversale (8) et la deuxième section transversale (9), et que la ligne d'action (46) de la charge le dispositif (45) coupe les lignes centrales des deux arbres (6, 7).

9. Modèle de banc d'essai (1) selon l'une des revendications 1 à 8,
caractérisé en
que le dispositif de charge (45) contient un actionneur servo-hydraulique ou électromagnétique (47), qui peut faire passer la force de charge de zéro à une valeur maximale et la ramener à zéro à chaque demi-rotation d'arbre.

10. Modèle de banc d'essai (1) selon l'une des revendications 1 à 9,
caractérisé en
que le dispositif de charge (45) contient un mécanisme de levage (48), qui peut soulever le deuxième cadre (5) du premier cadre (4) de quelques dixièmes de millimètre tous les 180° de rotation de l'arbre.
